# EUROPÄISCHE PATENTSCHRIFT

(11) **EP 3 844 024 B1**
(45) Veröffentlichungstag und Bekanntmachung des Hinweises auf die Patenterteilung: **04.10.2023**
(21) Anmeldenummer: 19758969.0
(22) Anmeldetag: 26.08.2019
(51) Int. Cl.: B60N 2/90

(54) **VERSTELLELEMENT FÜR EINEN FAHRZEUGSITZ**
ADJUSTING ELEMENT FOR A VEHICLE SEAT
ÉLÉMENT DE POSITIONNEMENT POUR UN SIÈGE DE VÉHICULE

(30) Priorität: 27.08.2018 DE 102018214399
(43) Veröffentlichungstag der Anmeldung: 07.07.2021
(73) Patentinhaber: Volkswagen AG, 38440 Wolfsburg (DE); Brose Sitech GmbH, 38442 Wolfsburg (DE)
(72) Erfinder: BARKOW, Tomas, 38102 Braunschweig (DE); KOHLHASE, Jens, 38102 Braunschweig (DE); SCHWEISSGUT-FORKEL, Silke, 38542 Leiferde (DE); STEITZ, Sebastian, 38464 Gross Twülpstedt (DE)
(74) Vertreter: Gulde & Partner
(86) Internationale Anmeldenummer: PCT/EP2019/072657
(87) Internationale Veröffentlichungsnummer: WO 2020/043636

(56) Entgegenhaltungen:
- US-A- 5 190 348
- US-B2- 7 350 851
- US-B2- 9 463 722

## Beschreibung

Die Erfindung betrifft einen Fahrzeugsitz, der mindestens eine Hauptkomponente und/oder mindestens eine Teilkomponente der Hauptkomponente und mindestens ein pneumatisches Verstellelement zur Verstellung mindestens einer der Komponenten umfasst.

Aus dem Stand der Technik sind verschiedene innovative Tragstrukturen bekannt.

Die Druckschrift DE 10 20 10 009 025 A1 offenbart ein Trägerelement dessen Federwirkung variabel einstellbar ist. Zwischen sogenannten Endblöcken weist das Trägerelement mindestens ein Federelement und mindestens ein Federspannelement auf, die mindestens in einer Achsrichtung auslenkbar sind, wobei das Federspannelement mit einstellbarer Vorspannung auf Zug gespannt ist und an seinen Endabschnitten Begrenzungsanschläge sind, die sich jeweils an den sich gegenüberliegenden Innenseiten der Endblöcke abstützen. Das Trägerelement ist für dynamische Belastungen ausgelegt und kann als tragendes Element, insbesondere Lattenroste von Betten, Sitz- oder Liegemöbel eingesetzt werden.

Die Druckschrift WO 2004/094754 A1 offenbart ein variables pneumatisches Bauelement, wobei die Länge von Zugelementen eines pneumatischen Bauelementes aus einem Hohlkörper mindestens zwei Zugelementen, zwei Kappen, mindestens zwei Knoten und mindestens einem Druckstab besteht, wobei die Länge der Zugelemente pneumatisch, hydraulisch oder mechanisch variiert werden kann. Ein Aktor oder eine Aktoreinheit ist zwischen den Enden der Zugelemente und einem Knoten angebracht. Mittels Steuer- und Regelelektronik sowie Sensoren kann die Zugspannung in den Zugelementen den Umständen angepasst werden. Mit anderen Worten, es wird eine verstärkte Luftstruktur gebildet, die als pneumatisches Bauelement eingesetzt werden kann. Benötigt wird eine Stange als Druckstab, die entlang eines aufblasbaren Zylinders (Ballons) angeordnet ist und es werden Zugelemente, insbesondere Kabel, derart spiralförmig um den Zylinder herum geschlungen, sodass eine sehr tragfähige, aber dennoch sehr leichte neue Tragstruktur als verstärkte Luftstruktur geschaffen ist. Funktionell ist vorgesehen, dass der Druckstab in einer Lasche auf dem aufblasbaren Zylinder angeordnet ist, so dass er sich nicht seitlich bewegen kann. Ist der aufblasbare Zylinder, insbesondere die Ballonhülle prall aufgeblasen, verstärkt die Ballonhülle die Tragfähigkeit des Druckstabes. Der Druckstab steht ein wenig über, damit der Ballon daran befestigt werden kann. Dort sind auch die Zugelemente befestigt, die ein oder mehrmals um die Ballonhülle gewickelt von einem zum anderen Ende geführt werden. Wird die Ballonhülle aufgeblasen, dann spannen sich die Zugelemente (Kabel) und biegen dabei den Zugstab durch. Diese Spannung erhöht, ähnlich einem Spannbeton die Tragfähigkeit des Bauteils. Stab, Kabel und aufgeblasene Ballonhülle geben sich somit gegenseitig Halt und können deshalb größere Kräfte aufnehmen, als jedes der Teile allein. Der Stab wird dabei von den Zugelementen gespannt. Zur Vervollständigung der Erläuterung wird auf die Internetseite https://www.deutschlandfunk.de/balken-fast-aus-luft.676.de.html?dram:article_id=24050 verwiesen.

Die Druckschrift US 86 40 386 B1 beschreibt eine aufblasbare Hochdruckstruktur und eine aufblasbare Balkenstruktur. Die aufblasbare Hochdruckstruktur wird aufgeblasen, wodurch ein erster Innendruck erzeugt wird. Die aufblasbare Balkenstruktur bewirkt einen aufgeblasenen zweiten Innendruck. Die aufblasbare Balkenstruktur ist gegen Biegen mit der aufblasbaren Hochdruckstruktur verstärkt. Der erste Innendruck ist größer als der zweite Innendruck.

Bekannt sind ferner sogenannte "bionische Muskeln", sie bestehen im Wesentlichen aus einem hohlen Elastomerzylinder mit eingebetteten Aramidfasern. Wird der bionische Muskel mit Luft befüllt, vergrößert sich dieser im Durchmesser und wird in der Länge kontrahiert. Dadurch wird eine fließend-elastische Bewegung ermöglicht. Das beschriebene Prinzip wird beispielsweise in der Druckschrift US 2 844 126 A und in der Druckschrift DE 10 2007 057 350 A1 noch detaillierter erläutert.

Zudem sind aus dem Stand der Technik funktionsintegrierte, bionische Fahrzeugsitze bekannt. Die Besonderheit dieser Fahrzeugsitze steckt in der Ausgestaltung der Rückenlehne, die sich das Flossenstrahl-Prinzip, das so genannte "Finray-Prinzip", zu Nutze macht. Die Anwendung dieses Prinzips und der grundsätzliche Aufbau, der so genannte Finray-Aufbau, wurde bereits in der Druckschrift EP 1 040 999 A2 für die Konstruktion von Bauteilen, wie Sitzlehnen und Sitzflächen, beschrieben. Anwendung findet das "Finray-Prinzip" gemäß der Druckschrift DE 10 2011 114 622 A1 bei der Verstellung von Seitenwangen eines Sitzteiles und/oder einer Rückenlehne eines Fahrzeugsitzes. Dabei ist vorgesehen, dass eine Seitenwange eines Sitzteiles und/oder einer Rückenlehne eines Fahrzeugsitzes als Finray-Aufbau beziehungsweise Finray-Struktur ausgestaltet ist/sind oder anders gesagt, zumindest die Seitenwange ist als eine intelligente reaktive Struktur ausgebildet, die unter Ausnutzung bionischer Ansätze funktioniert respektive reagiert.

Als weiterer Stand der Technik werden die Druckschriften US 9 463 722 B2, US 7 350 851 B2 und US 5 190 348 A genannt.

Der Erfindung liegt die Aufgabe zugrunde ein einfach bedienbares pneumatisches Verstellelement zu schaffen, welches in einem Fahrzeugsitz zur Verstellung mindestens einer Komponente des Fahrzeugsitzes Verwendung finden kann.

Ausgangspunkt der Erfindung ist ein Fahrzeugsitz, der mindestens eine Hauptkomponente und/oder mindestens eine Teilkomponente der Hauptkomponente und mindestens ein pneumatisches Verstellelement zur Verstellung mindesten einer der Komponenten umfasst.

Erfindungsgemäß ist vorgesehen, der Fahrzeugsitz mindestens einen luftdichten mit einem Fluid gefüllten langgestreckten Hohlkörper und mindestens ein Druckelement aufweist, das längs einer Mantellinie der Hülle des Hohlkörpers angeordnet ist, und das mindestens ein Zugelement aufweist, das zur kraftschlüssigen Befestigung des Druckelementes an dem mindestens einen Zugelement in mindestens zwei Knotenpunkten mit dem Zugelement verbunden ist, wobei das mindestens eine Zugelement den Hohlkörper derart umspannt, dass Volumenveränderungen des mindestens einen Hohlkörpers zumindest auf das mindestens eine Zugelement einwirken, wobei das mindestens eine Verstellelement in mindestens einem Hohlraum mindestens einer Hauptkomponente des Fahrzeugsitzes und/oder mindestens einer Teilkomponente der Hauptkomponente des Fahrzeugsitzes integriert angeordnet ist/sind, wobei die mindestens eine Hauptkomponente und/oder die mindestens eine Teilkomponente von einer Ausgangsposition in eine Verstellposition verstellbar ist/sind, indem das Fluid in dem mindestens einen Hohlkörper von einem Ausgangszustand ausgehend bei gleichzeitiger Volumenvergrößerung des mindestens einen Hohlkörpers in den Verstellzustand komprimiert wird, wodurch das Druckelement in der Verstellposition eine gegenüber der Ausgangsposition veränderte geometrische Form annimmt, die auf die mindestens eine Hauptkomponente und/oder die mindestens eine Teilkomponente übertragen wird.

Bevorzugt ist vorgesehen, dass das mindestens eine Zugelement die Hülle des Hohlkörpers derart umspannt und das mindestens eine Druckelement gegenüber der Hülle des Hohlkörpers derart angeordnet sind, dass eine Volumenvergrößerung des mindestens einen Hohlkörpers a) stets direkt auf das Zugelement und bei Anordnung des Druckelementes an der Hülle des Hohlkörpers direkt auf das Druckelement und indirekt über das Zugelement auf das Druckelement einwirkt oder b) bei Anordnung des Druckelementes fern der Hülle des Hohlkörpers ausschließlich indirekt über das Zugelement auf das Druckelement einwirkt.

Das mindestens eine Verstellelement ist in mindestens einem Hohlraum mindestens einer Hauptkomponente des Fahrzeugsitzes und/oder mindestens einer Teilkomponente der Hauptkomponente des Fahrzeugsitzes integriert angeordnet.

Durch diese Ausgestaltungen ist erfindungsgemäß in vorteilhafter Weise eine Funktion geschaffen, durch die mindestens eine Hauptkomponente und/oder die mindestens eine Teilkomponente von einer Ausgangsposition in eine Verstellposition verstellbar ist/sind, indem mindestens ein Hohlkörper von einem Ausgangszustand ausgehend in den Verstellzustand komprimiert wird, wodurch das Druckelement in der Verstellposition eine gegenüber der Ausgangsposition veränderte geometrische Form annimmt, die auf die mindestens eine Hauptkomponente und/oder die mindestens eine Teilkomponente übertragen wird.

Bevorzugt ist vorgesehen, dass das mindestens eine Druckelement und das mindestens eine Zugelement zwischen zwei in Längserstreckung des Hohlkörpers gesehen endseitigen an den Kappen des Hohlkörpers angeordneten Knotenpunkten eingespannt sind, die in gegenläufigem Schraubungssinn an dem Hohlkörper straff anliegend um den Hohlkörper geführt sind.

Zum Umspannen des Hohlkörpers mit dem mindestens einen Zugelement ist vorgesehen, dass sich das mindestens eine Zugelement auf einer Mantellinie des Hohlkörpers an mindestens einer Kreuzungsstelle in einer Art Wickelstruktur über Kreuz geführt ist, wobei die Mantellinie des Hohlkörpers dem Druckelement gegenüber verläuft.

Um die Wirkung der durch die Zugelemente auf das Druckelement übertragenen Druckkraft in Längserstreckung des Hohlkörpers nicht über die endseitigen an den Kappen des Hohlkörpers angeordneten Knotenpunkte auf das Druckelement zu übertragen ist vorgesehen, dass das mindestens eine Druckelement und das mindestens eine Zugelement zwischen den endseitigen und weiteren zwischen den endseitigen Knotenpunkten liegenden Kontenpunkten eingespannt sind.

In einer bevorzugten Ausgestaltung ist das Druckelement in der Art einer Blattfeder ausgebildet, die in einer vorgebbaren Raumrichtung elastischer und somit weniger biegesteif ist, als in einer anderen Raumrichtung, sodass dann, wenn der mindestens eine Hohlkörper unter Volumenvergrößerung von einem Ausgangszustand ausgehend in den Verstellzustand komprimiert wird, ein Biegeknicken des Druckelementes bei einer über das mindestens eine Zugelement auf das Druckelement wirkenden Druckkraft in vorteilhafter Weise in die zuvor vorgegebene Raumrichtung bewirkt wird. Die Vorgabe kommt in vorteilhafter Weise einer Einstellung der Bewegungsrichtung des Druckelementes in eine bestimmte Richtung gleich, sodass in einfacher Weise bei einer vorbekannten Einbaurichtung des Verstellelementes eine Verstellbewegung in eine gewünschte Richtung gewährleistet ist.

In einer bevorzugten Ausführungsform ist vorgesehen, dass der Hohlkörper bei der Volumenvergrößerung von dem Ausgangszustand in den Verstellzustand entfaltet wird, indem der Hohlkörper eine Faltstruktur aufweist.

In einer anderen bevorzugten in der Beschreibung detailliert erläuterten Ausführungsform ist vorgesehen, dass der Hohlkörper bei der Volumenvergrößerung von dem Ausgangszustand in den Verstellzustand gedehnt wird, indem das Material des Hohlkörpers elastisch, insbesondere reversibel dehnbar ausgebildet ist.

Schließlich ist in einer dritten bevorzugten Ausführungsform vorgesehen, dass der Hohlkörper bei der Volumenvergrößerung von dem Ausgangszustand in den Verstellzustand bis zu einem vorgebbaren maximalen Volumen entfaltet und unter weiterer Volumenvergrößerung gedehnt wird, indem der Hohlkörper eine Faltstruktur aufweist und aus einem elastischen Material ausgebildet ist.

In bevorzugter Ausgestaltung der Erfindung ist vorgesehen, dass das Verstellelement im Hohlraum eines Polsters mindestens einer Hauptkomponente des Fahrzeugsitzes und/oder mindestens einer Teilkomponente der Hauptkomponente des Fahrzeugsitzes integriert angeordnet ist/sind.

Der mindestens Hohlraum ist in einem Sitzteilpolster und/oder in einem Rückenlehnenpolster und/oder in einem Kopfstützenpolster eines als Hauptkomponente angeordneten Sitzteiles oder einer Rückenlehne oder einer Kopfstütze vorgesehen, und/oder der mindestens eine Hohlraum ist/sind in einer Teilkomponente des Sitzteiles oder der Rückenlehne oder der Kopfstütze (16) in einem Seitenwangenpolster angeordnet. Es wird deutlich, dass in vorteilhafter Weise alle wesentlichen Komponenten eines Fahrzeugsitzes mit dem erfindungsgemäßen Verstellelement verstellbar sind.

Vorgesehen ist ferner, dass der Fahrzeugsitz eingerichtet ist, um die beschriebene Funktion auszuführen. Das Druckelement und/oder das mindestens eine Zugelement weist zur Steuerung und Regelung der Zug- und Druckkräfte Spannungs- und/oder Längensensoren aufweist, die mit einer Steuer- und Regelelektronik in Verbindung stehen, wobei der Hohlkörperinnendruck des Hohlkörpers mittels einem Drucksensor innerhalb eines gewählten Druckbereich gehalten und in dem gewählten Druckbereich komprimiert und dekomprimiert wird, um von der Ausgangsposition in die Verstellposition und umgekehrt zu gelangen, wobei der Drucksensor ebenfalls mittels der Steuer- und Regelelektronik in Verbindung steht. Der Fachmann ist in der Lage die aufzubringenden Kräfte festzulegen, die zur Verstellung des Verstellelementes benötigt werden, mit anderen Worten, um die Verstellbewegung des Druckelementes durch Komprimieren und Dekomprimieren des Fluids innerhalb des Hohlkörpers und durch Erzeugung von Zugkräften in den Zugelementen und durch Erzeugung einer Druckkraft auf das Druckelement zu steuern, wie in der nachfolgenden Beschreibung näher erläutert ist.

Die Erfindung wird nachfolgend anhand der zugehörigen Zeichnungen erläutert. Es zeigen:
- Figur 1A: eine Rückenlehne eines Fahrzeugsitzes in einer schematischen Darstellung in der mehrere Verstellelemente in einer Ausgangsposition angeordnet sind;
- Figur 1B: die Rückenlehne eines Fahrzeugsitzes in einer schematischen Darstellung in der die mehreren Verstellelemente in einer Verstellposition angeordnet sind;
- Figur 2A: ein Vertikalschnitt durch die Rückenlehne im Bereich eines Tragelementes gemäß Figur 1A;
- Figur 2B: ein Horizontalschnitt durch die Rückenlehne im Bereich eines Verstellelementes gemäß Figur 1A in Ausgangsposition des Verstellelementes;
- Figur 2C: der Horizontalschnitt gemäß Figur 2B durch die Rückenlehne im Bereich eines Verstellelementes, jedoch gemäß Figur 1B in Verstellposition des Verstellelementes;
- Figur 3A: das Verstellelement in der Ausgangsposition in einer schematischen Seitenansicht;
- Figur 3B: das Verstellelement in der Ausgangsposition in einer schematischen Draufsicht;
- Figur 3C: das Verstellelement in der Verstellposition in einer schematischen Seitenansicht;
- Figur 3D: das Verstellelement in der Verstellposition in einer schematischen Draufsicht;
- Figur 4A: eine schematische Darstellung des Verstellelementes in der Verstellposition in einer Ausführungsform mit mehreren aufblasbaren Hohlkörpers;
- Figur 4B-1: eine schematische Darstellung des Verstellelementes in einer Ausführungsform mit einem aufblasbaren Hohlkörper als Teilkomponente, insbesondere einer Seitenwange eines Sitzteiles in der Ausgangsposition;

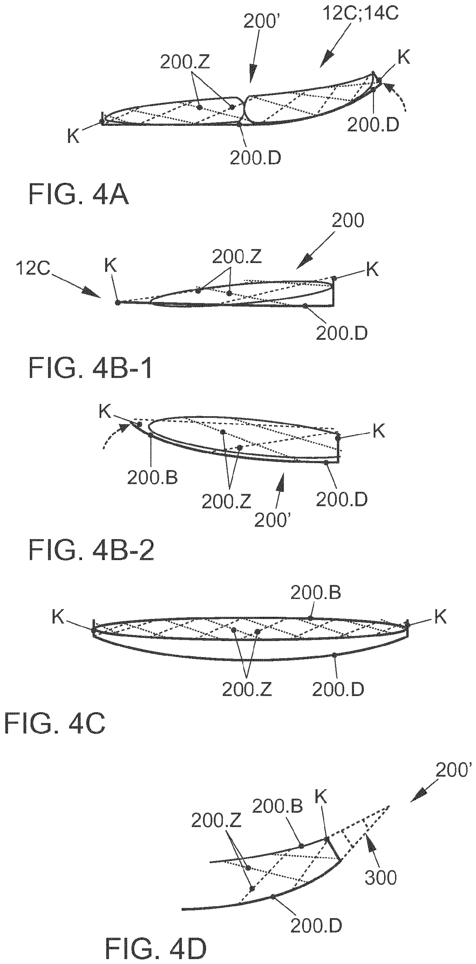

- Figur 4B-2: eine schematische Darstellung des Verstellelementes in der Ausführungsform gemäß Figur 4B-1 mit dem aufblasbaren Hohlkörper als Teilkomponente, insbesondere der Seitenwange des Sitzteiles in der Verstellposition;
- Figur 4C: eine schematische Darstellung des Verstellelementes in einer Ausführungsform bei der mehrere Zugelemente ausschließlich an endseitigen Knotenpunkten zwischen Hohlkörper und Zugelement angreifen;
- Figur 4D: ein Verstellelement in Verstellposition kombiniert mit einem Finray-Element.

Eine mögliche Ausführung der Erfindung wird nachfolgend in einem Ausführungsbeispiel erläutert. Für die Zwecke der Beschreibung soll die in Längsrichtung des Fahrzeuges liegende Richtung, in dem ein erfindungsgemäßer Fahrzeugsitz in der üblichen Position angeordnet ist, mit "x" bezeichnet werden. Mit "y" wird die Richtung in der Horizontalen des Fahrzeuges quer zur x-Richtung bezeichnet, und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

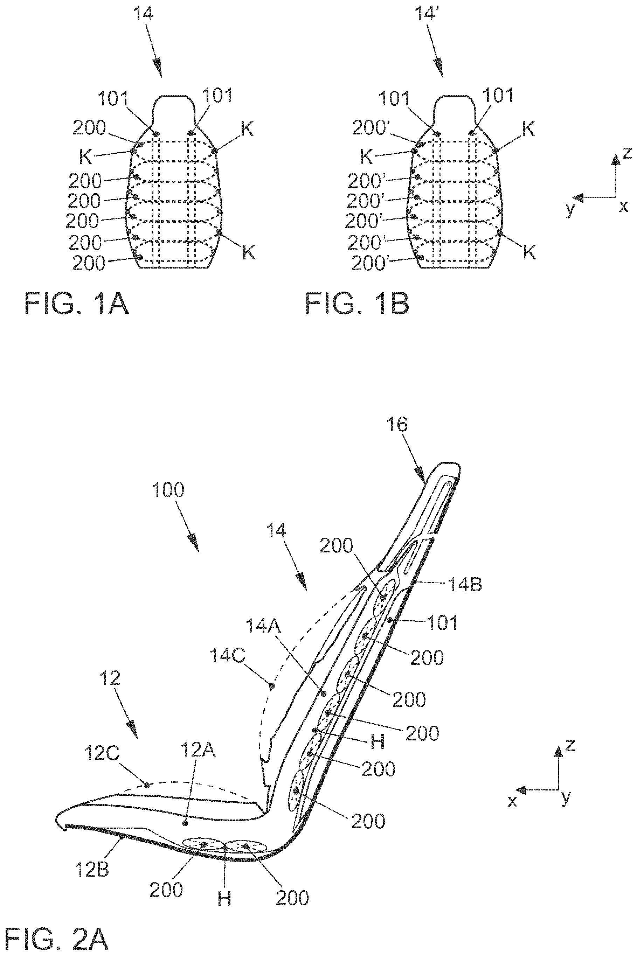

Die Figuren 1A und 1B sowie die Figur 2A werden nachfolgend in einer Zusammenschau erläutert.

In Figur 1A ist die Rückenlehne 14 mit Verstellelementen 200 gezeigt, die sich in einer Ausgangsposition befinden.

In Figur 1B ist die Rückenlehne 14' mit Verstellelementen 200` gezeigt, die sich in ihrer Verstellposition (`) befinden.

Die Figur 2A zeigt einen Fahrzeugsitz 100, der als Vertikalschnitt durch eines der Tragelemente 101 einer Rückenlehne 14, 14' gemäß den Figuren 1A und 1B gelegt ist.

Die Tragelemente 101 tragen mindestens in Höhenrichtung der Rückenlehne 14, 14' in einer vorgebbaren Höhe angeordnetes, im Ausführungsbeispiel insbesondere mehrere vertikal übereinander angeordnete Verstellelemente 200, 200`, mittels denen eine Verstellung von einer Ausgangsposition in eine Verstellposition des Sitzteiles 12 und/oder der Rückenlehne 14, 14' oder von Teilkomponenten 12C, 14C des Sitzteiles 12 und/oder der Rückenlehne 14, 14' möglich ist, wie noch erläutert wird.

Es ist in Figur 2A erkennbar, dass das Sitzteil 12 des Fahrzeugsitzes 100 solche Tragelemente 101 nicht benötigt, da die Verstellelemente 200,200' im Sitzteil 12 horizontal in einer Ebene angeordnet sind, sodass solche die Verstellelemente 200, 200' tragenden Tragelemente 101 im Sitzteil 12 nicht benötigt werden.

Der Fahrzeugsitz 100 umfasst je Sitzteil 12 und Rückenlehne 14 mindestens ein Polsterelement 12A, 14A, insbesondere ein Schaumpolsterelement in dem eine Hohlraum H ausgebildet ist, in dem jeweils mindestens ein Verstellelement 200 angeordnet ist.

Der Fahrzeugsitz 100 umfasst im Ausführungsbeispiel als rückwärtige Struktur eine Sitzteilschale 12B respektive eine Rückenlehneschale 14B als Basisstruktur des Fahrzeugsitzes 100 für das mindestens eine Polsterelement, in der das mindestens eine Polsterelement 12A, 14A mit dem mindestens eine integrierten Verstellelement 200, 200` einliegt.

Bevorzugt ist das Tragelement 101 mit der Rückenlehneschale 14B verbunden. Das Tragelement 101 kann aber auch mit der Sitzstruktur verbunden sein, sodass das Tragelement 101 mit der Rückenlehneschale 14B nicht direkt verbunden ist.

In Figur 2A sind als Teilkomponenten des Sitzteiles 12 und/oder der Rückenlehne 14 Seitenwangen 12C und 14C angedeutet, die jedoch nicht in der Schnittebene der in den Figuren 1A und 1B liegenden Tragelemente 101 liegen.

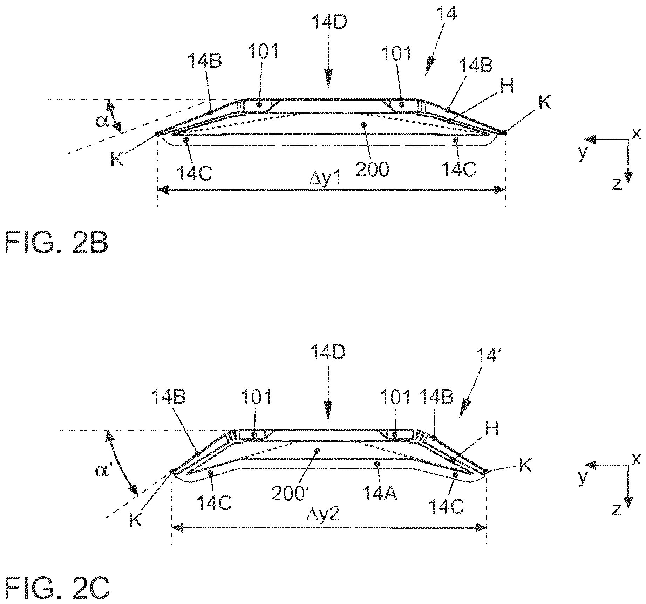

Durch einen Vergleich der Figuren 1A und 1B wird deutlich, dass sich die Distanzen Δy1, Δy2 von sogenannten Knotenpunkten K (Bezugszeichen nur teilweise angetragen) der Verstellelemente 200, 200' durch die Verstellung ändert, wie nachfolgend anhand der Figuren 2B und 2C näher erläutert wird.

Die Figuren 2B und 2C zeigen eine Rückenlehne 14 in einem Schnitt in einer horizontalen x/y-Ebene durch eine in vertikaler Position angeordnete Rückenlehne 14.

Die Figur 2B zeigt die Rückenlehne 14 in Ausgangsposition und die Figur 2C zeigt die Rückenlehne 14 in Verstellposition (').

Die Figuren 2B und 2C zeigen die Verstellung der Seitenwangen 14C mit Hilfe mindestens eines Verstellelementes 200 oder mehrere Verstellelemente, wobei sich die Distanz Δy1, Δy2 zwischen den sogenannten Knotenpunkten K des oder der Verstellelemente 200, 200` bei der Verstellung der Seitenwangen 14C verändert.

Die Seitenwangen 14C befinden sich in Figur 2B in der Ausgangsposition mit dem vorgebaren Winkel α und in Figur 2C in der Verstellposition (`), wobei sich die Distanz Δy1 der Knotenpunkte K in der Ausgangsposition verändert und die kleinere Distanz Δy2 zwischen den Knotenpunkten K (Δy1 > Δy2) eingestellt wird, wodurch sich der Ausstellwinkel der Seitenwangen 14C zu dem Winkel α' in Verstellposition (') ändert. Mit anderen Worten die Innenseite der Seitenwangen 14C wir näher an den Aufsitzenden herangeführt, indem der Winkel α' in Verstellposition (') gegenüber dem Winkel α in der Ausgangsposition vergrößert wird.

Mit anderen Worten, durch die Verstellung ist eine Sitzteilbreitenverstellung des Sitzteiles 12 und/oder eine Rückenlehnenbreitenverstellung der Rückenlehne 14 möglich, die analog auch auf andere Komponenten des Fahrzeugsitzes 100 insbesondere eine Kopfstütze 16 (vergleiche Figur 2A analog übertragbar ist.

Die Figuren 2B und 2C verdeutlichen ferner, dass eine zentraler Bereich, insbesondere ein Lordosenbereich 14D (vergleiche Figuren 42B und 2C) der Rückenlehne 14 ein eigenes Verstellelement 200, 200` aufweisen kann, das oder die im Ausführungsbeispiel zwischen den Tragelementen 101 im Lordosenbereich 14D des Aufsitzenden angeordnet ist/sind. Die Verstellelemente sind in den Figuren jedoch nicht dargestellt. In einem solchen Fall sind die Verstellelemente 200, 200` nur im Bereich der Seitenwangen 14C als Teilkomponenten ausgebildet, sodass im Lordosenbereich 14D ein Verstellelement als verstellbare Lordosevorrichtung anordbar ist.

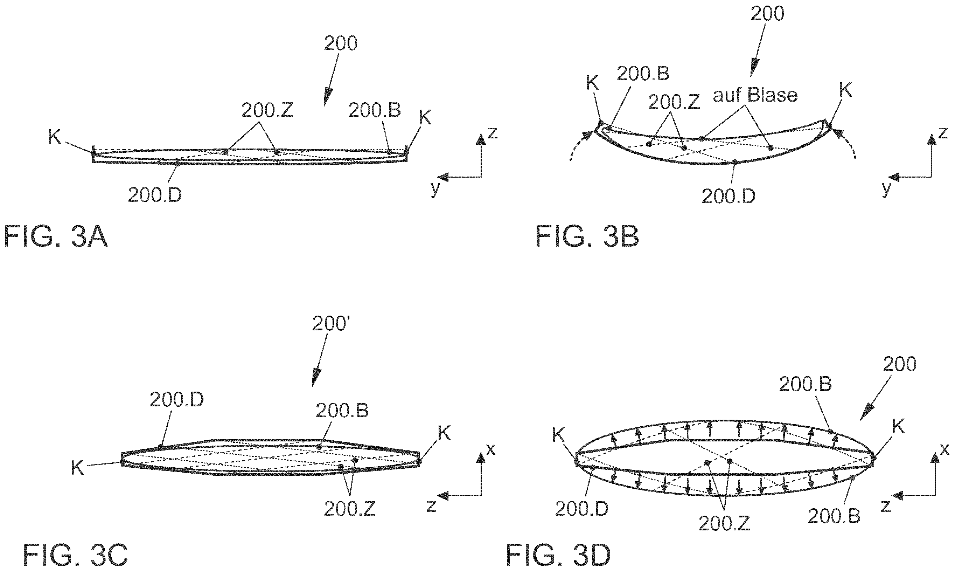

Die Verstellung von einer Ausgangsposition in eine Verstellposition des Sitzteiles 12 und/oder der Rückenlehne 14, 14' oder von Teilkomponenten 12C, 14C des Sitzteiles 12 und/oder der Rückenlehne 14, 14' erfolgt mittels des mindestens einen Verstellelementes 200 , welches (vergleiche die nachfolgenden Figuren 3A bis 4D) mindestens ein Druckelement 200.D, mindestens ein Zugelement 200.Z und mindestens einen pneumatisch veränderbaren Hohlkörper 200.B umfasst, der nachfolgend als Blase bezeichnet wird.

Die Beschreibung bezieht sich nachfolgend auf die Ausführungsform in die Blase bei der Volumenvergrößerung von dem Ausgangszustand in den Verstellzustand gedehnt wird, indem das Material der Blase elastisch, insbesondere reversibel dehnbar ausgebildet ist.

Es versteht sich, dass der erläuterte Effekt auch dann eintritt, wenn die Blase bei der Volumenvergrößerung von dem Ausgangszustand in den Verstellzustand entfaltet wird, indem die Blase als Faltstruktur ausgebildet ist oder wenn die Blase bei der Volumenvergrößerung von dem Ausgangszustand in den Verstellzustand bis zu einem vorgebbaren maximalen Volumen entfaltet und unter weiterer Volumenvergrößerung gedehnt wird, indem die Blase sowohl als Faltstruktur und auch aus einem elastischen Material ausgebildet ist.

Eine Hülle der Blase des Verstellelementes 200, 200' ist im Wesentlichen zylindrisch und gasdicht ausgebildet und weist zwischen den Knotenpunkten K eine Länge L auf, wobei der Durchmesser D an den sogenannten endseitig angeordneten Kappen 200. K zu den Knotenpunkten K hin abnimmt, jedoch in Längserstreckung des Hohlkörpers 200.B im Wesentlichen gleich groß ist.

Ein Verstellelement 200, 200' zur Verstellung der Seitenwangen 12C eines Sitzteiles 12 (analog zur Verstellung der Seitenwangen 14C einer Rückenlehne 14, 14') ist in den Figuren 3A, 3B und den Figur 3C, 3D dargestellt, wobei die Figuren 3A, 3B eine Seitenansicht und eine Draufsicht auf das Verstellelement 200 in seiner Ausgangsposition zeigt, während die Figuren 3C, 3D eine Seitenansicht und eine Draufsicht auf das Verstellelement 200' in seiner Verstellposition (`) zeigt.

Gemäß den Figuren 3A 3B, 3C, 3D ist mindestens ein Druckelement 200.D zwischen den Knotenpunkten K angeordnet.

Zwischen den Knotenpunkten K ist auch mindestens ein Zugelement 200.Z befestigt.

Erfindungsgemäß wird dafür gesorgt, dass über das mindestens eine Zugelement 200.Z eine Zugkraft auf das Druckelement 200.D ausgeübt wird, sodass sich das Druckelement 200.D in eine vorgebbare Richtung verbiegt. Das mindestens eine Zugelement 200.Z wird auf Zug belastet, sobald die Blase aufgeblasen (vergleiche Figuren 3C und 3D) wird.

Bevorzugt werden zwei Zugelemente 200.Z in gegenläufigem Schraubungssinn um die Blase geführt, wobei vorgesehen ist, dass die Zugelemente 200.Z in der Ausgangsposition der Blase bereits straff an der Hülle der Blase anliegen. Die Zugelemente 200.Z überkreuzen einander auf einer Mantellinie der Hülle, welche dem Druckelement 200.D gegenüber verläuft, insbesondere auf der halben Länge der zylindrischen Blase an mindestens einer Kreuzungsstelle, wodurch sichergestellt ist, dass die Blase in der durch die Anordnung der Zugelemente 200.Z erzeugten "Wickelstruktur" eingeschnürt ist, sodass sich jede Volumenvergrößerung der Blase auf die Zugelemente 200.Z auswirkt. Diese Wirkung ist grundsätzlich auch mit einem Zugelement 200.Z realisierbar, welches zwischen den Knotenpunkten K in einer entsprechenden "Wickelstruktur" die Blase einschnürt.

Bei einem Aufpumpen der Blase mithin einer Verstellung des Verstellelementes 200 → 200' kommt es durch die Komprimierung des Fluids in der Blase, mithin der Erhöhung des Druckes in der Blase durch die Volumenvergrößerung der Blase zur einer Erhöhung der Spannung in den Zugelementen 200.Z und somit des Druckelementes 200.D.

Da das oder die Zugelement/e 200.Z durch die erzeugte Zugkraft eine Zugkraft auf die Knotenpunkte K ausüben, wird das Druckelement 200.D auf Druck beansprucht, wobei eine Ausweichbewegung des Druckelementes 200.D in diejenige Richtung stattfindet, die hinsichtlich der Biegesteifigkeit den geringsten Druckwiderstand aufweist.

Bei einem beidseitig zwischen zwei Knotenpunkten K angeordneten Druckelement 200.D wird somit das Druckelement 200.D gestaucht oder anders gesagt es kommt zu einem Ausweichen, dem sogenannte Biegeknicken des stabförmigen Druckelement 200.D mit einer Längsdruckkraft, die von beiden Knotenpunkten K ausgehend, rechtwinklig zu einer der beiden Hauptachsen des Querschnitts wirkt, wobei keine Torsionsverdrehungen auftreten.

Die Erfindung macht sich diesen physikalischen Effekt zu Nutze und gibt die Richtung des Biegeknickens des Druckelementes 200.D dahingehend vor, dass ein Druckelement 200.D in der Art einer Blattfeder, die in einer vorgebbaren Raumrichtung biegsamer als in einer abweichenden Raumrichtung ist, angeordnet wird, das heißt welches in einer gewünschten Raumrichtung elastischer ist, sodass ein Biegeknickens des Druckelementes 200.D, insbesondere des in den Figuren 3A bis 3D gezeigten Druckelementes 200.D im Sitzteil 12 in z-Richtung erfolgt, sodass die Knotenpunkte K in der Verstellposition (') (vergleiche Figuren 3C und 3D) angehoben werden, wodurch eine Verstellung der Seitenwangen 12C von der Ausgangsposition (vergleiche Figuren 3A und 3B) in die Verstellposition (') angehoben werden, wodurch das Polsterelement 12A. insbesondere das Schaumpolsterelement des Sitzteiles 12 des Fahrzeugsitzes 100 im Bereich der Seitenwangen 12C mitgenommen wird.

Das Druckelement 200.D wird bevorzugt auf der Seite der Mantelfläche der Blase angeordnet, auf der das Biegeknicken gewünscht wird.

Mit anderen Worten, gemäß Figur 3C ist das Druckelement 200.D auf der Unterseite der Mantelfläche der Blase angeordnet, welches durch die erzeugte "Wickelstruktur" symmetrisch in die vorgegebene Raumrichtung ausknickt, sodass die Seitenwangen 12C von der Ausgangsposition (vergleiche Figuren 3A und 3B) in die Verstellposition (`) symmetrisch um eine vorgebbare Höhe in z-Richtung angehoben werden.

Bei einer Verkürzung der Zugelemente 200.Z schneiden diese tiefer in die Blase ein, verringern deren Volumen und erhöhen den Hohlkörperinnendruck der Blase, wobei der Effekt entsteht, dass wiederum gleichzeitig die Druckspannung im Druckstab 200.D erhöht wird, wie in der Druckschrift WO 2004/094754 A1 bereits erläutert wird.

Ein wesentlicher Unterschied zur erwähnten Druckschrift besteht allerdings darin, dass die Spannungen im Druckelement 200.D eine Vorspannung des Bauelementes hinsichtlich der Aufnahme äußerer Kräfte und Lasten darstellen, denn es ist vorgesehen, dass das Druckelement gegen Verschieben und Ausknicken gesichert ist. Bei dem vorliegenden Gegenstand der Erfindung wird aber im Gegensatz dazu das Druckelement 200.D zur Verstellung des Verstellelementes 200 → 200' aktiv ausgeknickt, sodass die auftretenden Kräfte gemäß vorliegenden Gegenstand der Erfindung zumindest zum Teil zur Verstellung und nicht nur Erzeugung einer Vorspannung in einem Bauelement genutzt werden.

Wie bereits detailliert erläutert führt einer Verkürzung der Zugelemente 220.Z durch Einschneiden der Zugelemente 220.Z tiefer in die Blase zu einer Verringerung des Volumen der Blasen 200.D, wodurch der Hohlkörperinnendruck der Blase erhöht wird, gleichzeitig die Druckspannung im Druckstab 200.D erhöht wird.

Dieser Effekt wird bei der vorliegenden Erfindung ebenfalls genutzt werden, indem beispielsweise eine Aufsitzender mit einem Körperteil, insbesondere seinem Gesäß auf das Sitzteil 12 oder mit seinem Oberkörper auf die Rückenlehne 14 oder mit seinem Kopf auf die Kopfstütze 16 mit einer Kraft einwirkt, wodurch die Blase nicht weiter aufgeblasen, aber zusätzlich komprimiert wird, und die Zugelemente 220.Z tiefer in die Blase zu einer Verringerung des Volumens der Blasen und ebenfalls zu einer Erhöhung des Hohlkörperinnendruckes der Blase und insgesamt zu einer Druckerhöhung in dem Druckelement 200.D führt. Das heißt, eine Verstellung ist auch aktiv durch den Aufsitzenden möglich der eine Druckkraft auf das Verstellelement 200, 200' ausübt, welches sich infolge an das jeweilige Körperteil selbsttätig anschmiegt, ohne dass die Blase zugleich aktiv aufgeblasen wird.

Die Verstellung des Verstellelementes 200, 200' erfolgt somit durch Einfüllen eines Fluids, insbesondere Luft in die Blase oder durch das Ablassen eines Fluids, insbesondere Luft.

Eine aktorische Ausgestaltung zur Realisierung dieser Funktion kann der Fachmann auf verschiedene bekannte Art und Weise lösen. Um das Druckelement 200.D und das oder die Zugelement/e 200.Z Steuern oder Regeln zu können, weisen dieselben bevorzugt Spannungs- oder Längensensoren auf. Der Hohlkörperinnendruck der Blase kann mittels einer Steuer- und Regelelektronik in Verbindung mit einem Drucksensor im gewählten Druckbereich gehalten werden. Meldet der mit der Regelelektronik verbundene Drucksensor eine Überschreitung des gewählten maximalen Hohlkörperinnendruckes, so öffnet die Regelelektronik ein Ablassventil und lässt so viel Druckluft aus dem Hohlkörper entweichen, bis der Druck wieder innerhalb eines zwischen Ausgangsposition und Verstellposition des Verstellelementes 200, 200' gewählten Druckbandes befindet. Im Falle einer Unterschreitung des gewählten Minimaldruckes wird der Hohlkörper der Blase auf Veranlassung der Regelelektronik mit zusätzlicher Druckluft beaufschlagt. Diese Druckluft wird beispielsweise von einem Druckspeicher oder direkt von einem Kompressor des Fahrzeugsitzes 100 und/oder des Fahrzeuges bereitgestellt.

Erfindungsgemäß wird noch offenbart, dass die Zugelemente 200.Z in einer Ausführungsform ausschließlich an endseitigen Knotenpunkten der Blase angreifen, wie in Figur 4C zur Verdeutlichung dargestellt ist.

In einer anderen Ausführungsvariante, die in den anderen Figuren offenbart ist, bilden die Zugelemente 200.Z weitere Knotenpunkte (nicht näher bezeichnet) mit dem Druckelement 200.D, wodurch das Ausknicken des Druckelementes 200.D in die jeweils gewünschte Richtung zielgerichteter steuerbar ist.

In Figur 4A wird verdeutlicht, dass einem Verstellelement 200, 200` Ausführungsform mehrere Blasen zugeordnet werden können, die unterschiedlich gesteuert oder geregelt werden können, sodass die Verstellwirkung bereichsweise, mithin entlang einer Seitenwange 12C, 14C oder einer anderen Komponenten 12, 14, 16 oder Teilkomponente 12C, 14C variabler einstellbar respektive verstellbar ist.

In den Figuren 4B-1 und 4B-2 wird eine weitere Ausführungsform verdeutlicht, dass ein Verstellelement 200, 200' mit einer Blase einer Teilkomponente 12C, 14C, insbesondere einer Seitenwange zugeordnet sein kann.

Die Figur 4B-1 zeigt die Ausgangsposition und die Figur 4B-2 die Verstellposition (') der Seitenwange 12C des Sitzteiles 12 mit einem Blick von vorn auf eine linke Seitenwange 12C des Sitzteiles 12.

Der zentrale Bereich, ob der Lordosenbereich zwischen zwei Verstellelement 200, 200' der Seitenwangen 14C einer Rückenlehne 14 weist dann in einer Ausgestaltungsvariante ein erfindungsgemäßes Verstellelement 200, 200' auf, welches auf die Lordose der Aufsitzenden durch Aufblasen und Ablassen des Fluids einwirkt.

Die Figur 4D zeigt ein Verstellelement 200' in der Verstellposition (`), welches mit einem Verstellelement 300 nach dem "Finray-Prinzip" kombiniert ausgebildet ist.

### Bezugszeichenliste

- 100: Fahrzeugsitz
- 101: Tragelement
- 12: Sitzteil in Ausgangsposition
- 12': Sitzteil in Verstellposition (`)
- 12A: Polsterelement
- 12B: Sitzteilschale
- 12C: Seitenwange
- 14: Rückenlehne in Ausgangsposition
- 14': Rückenlehne in Verstellposition (`)
- 14A: Polsterelement
- 14B: Rückenlehnenschale
- 14C: Seitenwange
- 14D: Lordosenbereich
- 200: Verstellelement in Ausgangsposition
- 200`: Verstellelement in Verstellposition (`)
- 200.Z: Zugelement
- 200.D: Druckelement
- 200.B: Hohlkörper
- 200. K: Kappen
- 300: Finray-Element
- H: Hohlraum
- Δy1: Distanz in Ausgangsposition
- Δy2: Distanz in Verstellposition
- K: Knotenpunkt
- α: Winkel in Ausgangsposition
- α': Winkel in Verstellposition (`)
- L: Länge
- D: Durchmesser
- x: Richtung in oder entgegen der üblichen Fahrtrichtung eines Fahrzeugs
- y: Richtung in der Horizontalen quer zur x-Richtung
- z: Richtung in der Vertikalen quer zur x-Richtung

## Patentansprüche

1. Fahrzeugsitz (100) umfassend mindestens eine Hauptkomponente (12, 14, 16) und/oder mindestens eine Teilkomponente (12C, 14C) der Hauptkomponente (12, 14, 16) und mindestens ein pneumatisches Verstellelement (200, 200') zur Verstellung mindestens einer der Komponenten (12, 14, 16; 12C, 14C), wobei der Fahrzeugsitz (100) mindestens einen luftdichten mit einem Fluid gefüllten Hohlkörper (200.B) und mindestens ein Druckelement (200.D) aufweist, das längs einer Mantellinie der Hülle des Hohlkörpers (200.B) angeordnet ist, und das mindestens ein Zugelement (200.Z) aufweist, das zur kraftschlüssigen Befestigung des Druckelementes (200.0) an dem mindestens einen Zugelement (200.Z) in mindestens zwei Knotenpunkten (K) mit dem Zugelement (200.Z) verbunden ist, wobei das mindestens eine Zugelement (200.Z) den Hohlkörper (200.B) derart umspannt, dass Volumenveränderungen des mindestens einen Hohlkörpers (200.B) zumindest auf das mindestens eine Zugelement (200.Z) einwirken, wobei das mindestens eine Verstellelement (200, 200') in mindestens einem Hohlraum (H) mindestens einer Hauptkomponente (12, 14, 16) des Fahrzeugsitzes (100) und/oder mindestens einer Teilkomponente (12C, 14C) der Hauptkomponente (12, 14, 16) des Fahrzeugsitzes (100) integriert angeordnet ist/sind, wobei die mindestens eine Hauptkomponente (12, 14, 16) und/oder die mindestens eine Teilkomponente (12C, 14C) von einer Ausgangsposition in eine Verstellposition (`) verstellbar ist/sind, indem das Fluid in dem mindestens einen Hohlkörper (200.B) von einem Ausgangszustand ausgehend bei gleichzeitiger Volumenvergrößerung des mindestens einen Hohlkörpers (200.B) in den Verstellzustand komprimiert wird, wodurch das Druckelement (200.D) in der Verstellposition (') eine gegenüber der Ausgangsposition veränderte geometrische Form annimmt, die auf die mindestens eine Hauptkomponente (12, 14, 16) und/oder die mindestens eine Teilkomponente (12C, 14C) übertragen wird.

2. Fahrzeugsitz (100) nach Anspruch 1, **dadurch gekennzeichnet, dass** das mindestens eine Zugelement (200.Z) die Hülle des Hohlkörpers (200.B) derart umspannt und das mindestens eine Druckelement (200.D) gegenüber der Hülle des Hohlkörpers (200.B) derart angeordnet ist, dass eine Volumenvergrößerung des mindestens einen Hohlkörpers (200.B)
• a) stets direkt auf das Zugelement (200.Z) und bei Anordnung des Druckelementes (200.D) an der Hülle des Hohlkörpers (200.B) direkt auf das Druckelement (200.D) und indirekt über das Zugelement (200.Z) auf das Druckelement (200.D) einwirkt der
• b) bei Anordnung des Druckelementes (200.D) fern der Hülle des Hohlkörpers (200.B) ausschließlich indirekt über das Zugelement (200.Z) auf das Druckelement (200.D) einwirkt.

3. Fahrzeugsitz (100) nach Anspruch 1, **dadurch gekennzeichnet, dass** das mindestens eine Druckelement (200.D) und das mindestens eine Zugelement (200.Z) zwischen zwei in Längserstreckung des Hohlkörpers (200.B) gesehen endseitigen an den Kappen (200.K) des Hohlkörpers (200.B) angeordneten Knotenpunkten (K) eingespannt sind, die in gegenläufigem Schraubungssinn an dem Hohlkörper (200.B) straff anliegend um den Hohlkörper (200.B) geführt sind.

4. Fahrzeugsitz (100) nach Anspruch 1, **dadurch gekennzeichnet, dass** sich das mindestens eine Zugelement (200.Z) auf einer Mantellinie des Hohlkörpers (200.B) an mindestens einer Kreuzungsstelle in einer Wickelstruktur über Kreuz geführt ist, wobei die Mantellinie des Hohlkörpers (200.B) dem Druckelement (200.D) gegenüber verläuft.

5. Fahrzeugsitz (100) nach Anspruch 3 oder den Ansprüchen 3 und 4, **dadurch gekennzeichnet, dass** das mindestens eine Druckelement (200.D) und das mindestens eine Zugelement (200.Z) zwischen den endseitigen und weiteren zwischen den endseitigen Knotenpunkten (K) liegenden Kontenpunkten (K) eingespannt sind.

6. Fahrzeugsitz (100) nach Anspruch 1, **dadurch gekennzeichnet, dass** das Druckelement (200.D) in der Art einer Blattfeder ausgebildet ist, die in einer vorgebbaren Raumrichtung (x, y, z) elastischer ist, als in einer anderen Raumrichtung (x, y, z), sodass dann wenn der mindestens eine Hohlkörper (200.B) von dem Ausgangszustand ausgehend unter Volumenvergrößerung in den Verstellzustand komprimiert wird, ein Biegeknicken des Druckelementes (200.D) bei einer über das mindestens eine Zugelement (200.Z) auf das Druckelement (200.D) wirkenden Druckkraft in die vorgegebene Raumrichtung (x, y, z) bewirkt wird.

7. Fahrzeugsitz nach mindestens einem der vorhergehenden Ansprüche, **dadurch gekennzeichnet, dass** der Hohlkörper (200.B) bei der Volumenvergrößerung von dem Ausgangszustand in den Verstellzustand entfaltet wird, da der Hohlkörper (200.B) eine Faltstruktur aufweist.

8. Fahrzeugsitz nach mindestens einem der vorhergehenden Ansprüche, **dadurch gekennzeichnet, dass** der Hohlkörper (200.B) bei der Volumenvergrößerung von dem Ausgangszustand in den Verstellzustand gedehnt wird, indem das Material des Hohlkörpers (200.B) elastisch ausgebildet ist.

9. Fahrzeugsitz (100) nach den Ansprüchen 7 und 8, **dadurch gekennzeichnet, dass** der Hohlkörper (200.B) bei der Volumenvergrößerung von dem Ausgangszustand in den Verstellzustand bis zu einem vorgebbaren maximalen Volumen entfaltet und unter weiterer Volumenvergrößerung gedehnt wird, da der Hohlkörper (200.B) eine Faltstruktur aufweist und aus einem elastischen Material ausgebildet ist.

10. Fahrzeugsitz (100) nach Anspruch 1, **dadurch gekennzeichnet, dass** das Verstellelement (200, 200') im Hohlraum (H) eines Polsters mindestens einer Hauptkomponente (12, 14, 16) des Fahrzeugsitzes (100) und/oder mindestens einer Teilkomponente (12C, 14C) der Hauptkomponente (12, 14, 16) des Fahrzeugsitzes (100) integriert angeordnet ist/sind, wobei der mindestens eine Hohlraum (H) in einem Sitzteilpolster und/oder in einem Rückenlehnenpolster und/oder in einem Kopfstützenpolster eines als Hauptkomponente (12, 14, 16) angeordneten Sitzteiles (12) oder einer Rückenlehne (14) oder einer Kopfstütze (16) vorgesehen ist, und/oder der mindestens eine Hohlraum (H) ist/sind in einer Teilkomponente des Sitzteiles (12) oder der Rückenlehne (14) oder der Kopfstütze (16) in einem Seitenwangenpolster (12C, 14C) angeordnet.

11. Fahrzeugsitz nach Anspruch 1, **dadurch gekennzeichnet, dass** das Druckelement (200.D) und/oder das mindestens eine Zugelement (200.Z) zur Steuerung und Regelung der Zug- und Druckkräfte Spannungs- und/oder Längensensoren aufweist, die mit einer Steuer- und Regelelektronik in Verbindung stehen, wobei der Hohlkörperinnendruck des Hohlkörpers (200.B) mittels einem Drucksensor innerhalb eines gewählten Druckbereichs gehalten und in dem gewählten Druckbereich komprimiert und dekomprimiert wird, um von der Ausgangsposition in die Verstellposition (') und umgekehrt zu gelangen, wobei der Drucksensor ebenfalls mittels der Steuer- und Regelelektronik in Verbindung steht.

## Claims

1. Vehicle seat (100) comprising at least one main component (12, 14, 16) and/or at least one sub-component (12C, 14C) of the main component (12, 14, 16) and at least one pneumatic adjustment element (200, 200') for adjusting at least one of the components (12, 14, 16; 12C, 14C),
wherein the vehicle seat (100) has at least one air-tight hollow body (200.B) filled with a fluid, and has at least one pressure element (200.0) which is arranged along a surface line of the envelope of the hollow body (200.B) and which has at least one tension element (200.Z) that is connected to the tension element (200.Z) for the force-fitting fastening of the pressure element (200.0) to the at least one tension element (200.Z) at at least two nodes (K), wherein the at least one tension element (200.Z) spans around the hollow body (200.B) in such a way that volume changes of the at least one hollow body (200.B) act at least on the at least one tension element (200.Z), wherein the at least one adjustment element (200, 200') is/are arranged so as to be integrated in at least one cavity (H) of at least one main component (12, 14, 16) of the vehicle seat (100) and/or at least one sub-component (12C, 14C) of the main component (12, 14, 16) of the vehicle seat (100), wherein the at least one main component (12, 14, 16) and/or the at least one sub-component (12C, 14C) can be adjusted from an initial position into an adjustment position (') by compressing the fluid in the at least one hollow body (200.B) starting from an initial state with simultaneous volume increase of the at least one hollow body (200.B) into the adjustment state, as a result of which the pressure element (200.0) assumes, in the adjustment position ('), a geometric shape that is changed with respect to the initial position and that is transferred to the at least one main component (12, 14, 16) and/or the at least one sub-component (12C, 14C).

2. Vehicle seat (100) according to claim 1, **characterized in that** the at least one tension element (200.Z) spans around the envelope of the hollow body (200.B) in such a way that, and the at least one pressure element (200.D) is arranged with respect to the envelope of the hollow body (200.B) in such a way that, a volume increase of the at least one hollow body (200.B)
• a) always acts directly on the tension element (200.Z) and, when the pressure element (200.0) is arranged on the envelope of the hollow body (200.B), acts directly on the pressure element (200.0) and indirectly on the pressure element (200.0) via the tension element (200.Z), or
• b) when the pressure element (200.0) is arranged remote from the envelope of the hollow body (200.B), acts solely indirectly on the pressure element (200.D) via the tension element (200.Z).

3. Vehicle seat (100) according to claim 1, **characterized in that** the at least one pressure element (200.0) and the at least one tension element (200.Z) are spanned between two nodes (K) that are arranged on the caps (200.K) of the hollow body (200.B) and are at the ends as seen in the longitudinal extension of the hollow body (200.B), said nodes extending around the hollow body (200.B) in a counter-rotating helical direction so as to fit tightly on the hollow body (200.B).

4. Vehicle seat (100) according to claim 1, **characterized in that** the at least one tension element (200.Z) extends crosswise at at least one intersection point in a winding structure on a surface line of the hollow body (200.B), the surface line of the hollow body (200.B) extending opposite the pressure element (200.0).

5. Vehicle seat (100) according to claim 3 or claims 3 and 4,
**characterized in that** the at least one pressure element (200.0) and the at least one tension element (200.Z) are spanned between the end nodes and further nodes (K) located between the end nodes (K).

6. Vehicle seat (100) according to claim 1, **characterized in that** the pressure element (200.0) is designed in the manner of a leaf spring that is more elastic in a specifiable spatial direction (x, y, z) than in another spatial direction (x, y, z) so that, if the at least one hollow body (200.B) is compressed starting from the initial state with a volume increase into the adjustment state, the pressure element (200.0) is bent in the predetermined spatial direction (x, y, z) in the case of a pressure force acting on the pressure element (200.0) via the at least one tension element (200.Z).

7. Vehicle seat according to at least one of the preceding claims,
**characterized in that** the hollow body (200.B) is unfolded from the initial state into the adjustment state during the volume increase since the hollow body (200.B) has a folding structure.

8. Vehicle seat according to at least one of the preceding claims, **characterized in that** the hollow body (200.B) is expanded from the initial state into the adjustment state during the volume increase by the material of the hollow body (200.B) being elastic.

9. Vehicle seat (100) according to claims 7 and 8, **characterized in that** the hollow body (200.B) unfolds from the initial state into the adjustment state up to a specifiable maximum volume during the volume increase and is expanded with further volume increase since the hollow body (200.B) has a folding structure and is formed from an elastic material.

10. Vehicle seat (100) according to claim 1, **characterized in that** the adjustment element (200, 200') is arranged so as to be integrated in the cavity (H) of a cushion of at least one main component (12, 14, 16) of the vehicle seat (100) and/or at least one sub-component (12C, 14C) of the main component (12, 14, 16) of the vehicle seat (100), the at least one cavity (H) being provided in a seat-part cushion and/or in a backrest cushion and/or in a headrest cushion of a seat part (12) arranged as the main component (12, 14, 16) or of a backrest (14) or of a headrest (16), and/or the at least one cavity (H) being arranged in a side bolster cushion (12C, 14C) in a sub-component of the seat part (12) or of the backrest (14) or of the headrest (16).

11. Vehicle seat according to claim 1, **characterized in that** the pressure element (200.0) and/or the at least one tension element (200.Z) has, in order to control, in an open-loop and closed-loop manner, the tensile and compressive forces, voltage and/or length sensors which are connected to control electronics, the hollow body internal pressure of the hollow body (200.B) being maintained within a selected pressure range and compressed and decompressed in the selected pressure range by means of a pressure sensor, in order to reach the adjustment position (') from the initial position and vice versa, the pressure sensor likewise being connected by means of the control electronics.

## Revendications

1. Siège de véhicule (100) comprenant au moins un composant principal (12, 14, 16) et/ou au moins un composant partiel (12C, 14C) du composant principal (12, 14, 16) et au moins un élément de réglage pneumatique (200, 200') pour le réglage d'au moins un des composants (12, 14, 16 ; 12C, 14C),
dans lequel le siège de véhicule (100) présente au moins un corps creux (200.B) étanche rempli d'un fluide et au moins un élément de pression (200.D), qui est agencé le long d'une génératrice de la coque du corps creux (200.B) et qui présente au moins un élément de traction (200.Z), qui est relié, pour la fixation par complémentarité de force de l'élément de pression (200.D) à l'au moins un élément de traction (200.Z) dans au moins deux noeuds (K) avec l'élément de traction (200.Z), dans lequel l'au moins un élément de traction (200.Z) enserre le corps creux (200.B) de telle sorte que des modifications de volume de l'au moins un corps creux (200.B) agissent au moins sur l'au moins un élément de traction (200.Z), dans lequel l'au moins un élément de réglage (200, 200') est/sont agencés intégrés dans au moins une cavité (H) d'au moins un composant principal (12, 14, 16) du siège de véhicule (100) et/ou au moins un composant partiel (12C, 14C) du composant principal (12, 14, 16) du siège de véhicule (100), dans lequel l'au moins un composant principal (12, 14, 16) et/ou l'au moins un composant partiel (12C, 14C) sont réglables depuis une position de départ dans une position de réglage (`), en ce que le fluide dans l'au moins un corps creux (200.B) est comprimé depuis un état de départ par une augmentation de volume simultanée de l'au moins un corps creux (200.B) dans l'état de réglage, moyennant quoi l'élément de pression (200.D) adopte dans la position de réglage (`) une forme géométrique modifiée par rapport à la position de départ, qui est transmise à l'au moins un composant principal (12, 14, 16) et/ou l'au moins un composant partiel (12C, 14C).

2. Siège de véhicule (100) selon la revendication 1, **caractérisé en ce que** l'au moins un élément de traction (200.Z) enserre la coque du corps creux (200.B) et l'au moins un élément de pression (200.D) est agencé par rapport à la coque du corps creux (200.B) de telle sorte qu'une augmentation de volume de l'au moins un corps creux (200.B)
• a) agit directement sur l'élément de traction (200.Z) et lors d'un agencement de l'élément de pression (200.D) sur la coque du corps creux (200.B) directement sur l'élément de pression (200.D) et indirectement par le biais de l'élément de traction (200.Z) sur l'élément de pression (200.D) ou
• b) lors d'un agencement de l'élément de pression (200.D) à distance de la coque du corps creux (200.B), agit exclusivement indirectement par le biais de l'élément de traction (200.Z) sur l'élément de pression (200. D).

3. Siège de véhicule (100) selon la revendication 1, **caractérisé en ce que** l'au moins un élément de pression (200.D) et l'au moins un élément de traction (200.Z) sont enserrés entre deux noeuds (K) agencés vus dans l'extension longitudinale du corps creux (200.B) côté extrémité sur les couvercles (200.K) du corps creux (200.B), qui sont guidés, dans le sens opposé au vissage, autour du corps creux (200.B) en s'appliquant de manière tendue contre le corps creux (200.B).

4. Siège de véhicule (100) selon la revendication 1, **caractérisé en ce que** l'au moins un élément de traction (200.Z) est guidé en croix sur une génératrice du corps creux (200.B) au niveau d'au moins un point de croisement en une structure d'enroulement, dans lequel la génératrice du corps creux (200.B) s'étend à l'opposé de l'élément de pression (200.D).

5. Siège de véhicule (100) selon la revendication 3 ou les revendications 3 et 4, **caractérisé en ce que** l'au moins un élément de pression (200.D) et l'au moins un élément de traction (200.Z) sont enserrés entre les noeuds du côté d'extrémité et d'autres noeuds (K) se trouvant entre les noeuds (K) du côté d'extrémité.

6. Siège de véhicule (100) selon la revendication 1, **caractérisé en ce que** l'élément de pression (200.D) est conçu sous la forme d'un ressort à lames, qui est élastique dans une direction spatiale pouvant être prédéfinie (x, y, z), comme dans une autre direction spatiale (x, y, z), de sorte que lorsque l'au moins un corps creux (200.B) est comprimé depuis l'état de départ avec l'augmentation de volume dans l'état de réglage, un flambage par flexion de l'élément de pression (200.D) est provoqué par une force de pression agissant par le biais de l'au moins un élément de traction (200.Z) sur l'élément de pression (200.D) dans la direction spatiale prédéfinie (x, y, z).

7. Siège de véhicule selon au moins l'une quelconque des revendications précédentes, **caractérisé en ce que** le corps creux (200.B) se déploie lors de l'augmentation de volume de l'état de départ à l'état de réglage, car le corps creux (200.B) présente une structure pliante.

8. Siège de véhicule selon au moins l'une quelconque des revendications précédentes, **caractérisé en ce que** le corps creux (200.B) est étiré lors de l'augmentation de volume de l'état de départ à l'état de réglage, **en ce que** le matériau du corps creux (200.B) est conçu élastique.

9. Siège de véhicule (100) selon les revendications 7 et 8, **caractérisé en ce que** le corps creux (200.B) se déploie lors de l'augmentation de volume de l'état de départ à l'état de réglage jusqu'à un volume maximal pouvant être prédéfini et est étiré lors d'une augmentation de volume supplémentaire, car le corps creux (200.B) présente une structure pliante et est conçu en un matériau élastique.

10. Siège de véhicule (100) selon la revendication 1, **caractérisé en ce que** l'élément de réglage (200, 200') est agencé intégré dans la cavité (H) d'un rembourrage d'au moins un composant principal (12, 14, 16) du siège de véhicule (100) et/ou d'au moins un composant partiel (12C, 14C) du composant principal (12, 14, 16) du siège de véhicule (100), dans lequel l'au moins une cavité (H) est prévue dans un rembourrage d'assise et/ou dans un rembourrage de dossier et/ou dans un rembourrage d'appui-tête d'une assise (12) ou d'un dossier (14) ou d'un appui-tête (16) agencé(s) en guise de composant principal (12, 14, 16) et/ou l'au moins une cavité (H) est agencée dans un composant partiel de l'assise (12) ou du dossier (14) ou de l'appui-tête (16) dans un rembourrage de paroi latérale (12C, 14C).

11. Siège de véhicule selon la revendication 1, **caractérisé en ce que** l'élément de pression (200.D) et/ou l'au moins un élément de traction (200.Z) présente, pour la commande et la régulation des forces de traction et de pression, des capteurs de tension et/ou de longueur, qui sont en liaison avec une électronique de commande et de régulation, dans lequel la pression interne de corps creux du corps creux (200.B) est maintenue au moyen d'un capteur de pression au sein d'une plage de pression choisie et comprimé et décomprimé dans la plage de pression choisie, afin de passer de la position de départ dans la position de réglage (`) et inversement, dans lequel le capteur de pression est également en liaison au moyen de l'électronique de commande et de régulation.
